# FASCICULE DE BREVET EUROPEEN

(11) **EP 0 842 818 B1**
(45) Date de publication et mention de la délivrance du brevet: **17.09.2003**
(21) Numéro de dépôt: 97119615.9
(22) Date de dépôt: 10.11.1997
(51) Int. Cl.: B60Q 1/26

(54) **Feu de signalisation, notamment pour véhicules, réalisant au moins deux fonctions de signalisation**
Signalleuchte mit zwei unterschiedlichen Signalisierungsfunktionen, insbesondere für Kraftfahrzeuge
Signal light with two different signalling functions especially for vehicles

(30) Priorité: 15.11.1996 FR 9613939
(43) Date de publication de la demande: 20.05.1998
(73) Titulaire: VALEO VISION, 93000 Bobigny (FR)
(72) Inventeur: Bertrand, Yannick, 89100 Saint Martin du Tertre (FR); De Domingo, Jean-François, 89100 Sens (FR)
(74) Mandataire: Gamonal, Didier

(56) Documents cités:
- EP-A- 0 180 145
- EP-A- 0 790 458
- FR-A- 2 306 399
- FR-A- 2 525 322
- FR-A- 2 530 781

## Description

La présente invention se rapporte aux feux de signalisation, notamment pour véhicule, qui réalisent au moins deux fonctions de signalisation.

Les feux de signalisation communément utilisés sur les véhicules, par exemple sur les véhicules automobiles, réalisent en général plusieurs fonctions de signalisation qui consistent chacune en l'émission d'une lumière de couleur normalisée qui peut varier d'une fonction à l'autre. De tels feux sont donc divisés en compartiments dont chacun assure une fonction de signalisation différente.

Dans une conception classique, un filtre coloré est prévu au droit de chaque compartiment afin de donner à la lumière émise par ledit compartiment la couleur désirée. L'ensemble des filtres, qui forme en général la glace extérieure du feu, n'a donc pas un aspect uniforme puisque certaines fonctions sont de couleurs différentes. Un feu ainsi réalisé n'a donc pas un aspect esthétique satisfaisant.

Afin de remédier à cet inconvénient, la Demanderesse a déjà proposé dans son brevet français publié sous le numéro 2 530 781 de réaliser une glace extérieure de couleur uniforme (par exemple rose) et de placer dans chaque compartiment une lampe émettant une lumière incolore et, entre la lampe et la glace, un écran de couleur complémentaire à la couleur de la glace extérieure par rapport à la couleur de la fonction que doit réaliser le compartiment. Par exemple, le document précité enseigne de placer un écran de couleur bleu-vert dans le compartiment correspondant à la fonction recul dans le cas d'une glace extérieure rose.

Un feu réalisé en suivant les enseignements d brevet précité présente donc une bonne homogénéité lorsque les lampes sont éteintes puisque la glace extérieure a une couleur uniforme. EP 0 790 458 A1 (état de technique selon l'article 54 (3) et (4) CBE pour les états contractants désignés DE, ES, GB, IT) divulgue un feu de signalisation, comportant au moins un premier et un second compartiments qui reçoivent chacun au moins une lampe. Une glace colorée dans une première couleur (en rose) s'étend au moins au droit des premier et second compartiments. Un écran s'étendant au droit du premier et également au droit du second compartiments est situé entre les lampes et la glace. La teinte de l'écran est complémentaire de celle du voyant ou il est teinté au droit du premier compartiment en vert et au droit du second compartiment en bleu. La présente invention vise à améliorer encore l'homogénéité du feu, notamment en réduisant au minimum les différences d'aspect des différents compartiments, dues pour l'essentiel aux différences de couleur entre certains des écrans utilisés dans chaque compartiment.

D'autre part, l'invention cherche à diminuer le nombre de pièces nécessaires à la réalisation du feu, de façon notamment à réduire les coûts de fabrication.

Pour ce faire, l'invention propose un feu de signalisation, notamment pour véhicule, selon les caractéristiques de la revendication 1; un tel feu de signalisation comporte :
- au moins un premier et un second compartiments qui reçoivent chacun au moins une lampe,
- une glace colorée dans une première couleur qui s'étend au moins au droit des premier et second compartiments;
- un écran situé entre la première lampe du premier compartiment et la glace au droit du premier compartiment et coloré dans une deuxième couleur complémentaire à la première couleur par rapport au faisceau lumineux que doit émettre le premier compartiment;
dans ce feu de signalisation, l'écran s'étend également au droit du second compartiment; au droit des premier et second compartiments, l'écran a une couleur uniforme, et il est prévu des moyens de coloration du flux lumineux entre la seconde lampe du second compartiment et l'écran.

D'autres caractéristiques de la présente invention sont les suivantes :
- l'écran est coloré en bleu-vert et la glace est colorée en rose ;
- la lampe du premier compartiment est une lampe cristal ;
- la lampe du second compartiment est une lampe ambre ;
- la lampe du second compartiment est une lampe cristal et il est prévu des moyens de coloration du faisceau lumineux entre cette lampe et l'écran ;
- l'écran présente sur l'une de ses faces des stries cylindriques horizontales ;
- la glace présente sur sa face interne des stries cylindriques verticales ;
- la glace est la glace extérieure de fermeture du feu ;
- le premier compartiment réalise une fonction recul et le second compartiment une fonction indicateur de direction ;
- le feu comporte d'autres compartiments qui réalisent des fonctions différentes.

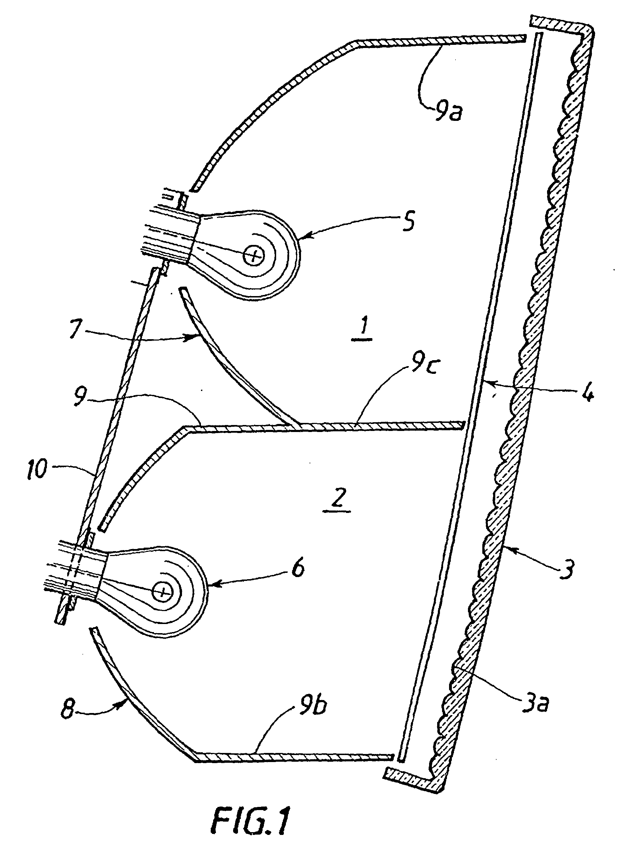

Un exemple de réalisation de l'invention va à présent être décrit en référence au dessin annexé sur lequel la figure 1 est une section horizontale d'un feu de signalisation réalisé conformément aux enseignements de l'invention.

Ce feu de signalisation réalise deux fonctions de signalisation, en l'occurrence la fonction recul et la fonction indicateur de direction.

Ce feu comporte un socle 9 (ou boîtier) moulé en matière plastique. La partie du socle généralement dénommée partie arrière se compose de deux parois 7, 8 qui ont chacune la forme générale d'un paraboloïde de révolution dont l'axe est l'axe d'émission de la lumière, essentiellement parallèle à l'axe du feu. Ces parois se prolongent vers l'avant, c'est-à-dire dans la direction opposée au sommet des paraboloïdes, pour former dans cette région des parois 9a, 9b, 9c essentiellement parallèles à l'axe du feu.

Dans la région située à l'intérieur du feu, la paroi centrale 9c prolonge communément les deux parois en forme de paraboloïde 7, 8.

Le socle 9 réalise ainsi deux compartiments 1, 2 séparés par la paroi centrale 9c, essentiellement fermés sur l'arrière chacun par une paroi 7, 8 en forme de paraboloïde et ouverts vers l'avant.

Chaque compartiment 1, 2 reçoit une lampe 5, 6 qui est montée par l'arrière du socle 9 à travers des trous prévus à cet effet dans la paroi arrière du compartiment 1, 2 au niveau du sommet du paraboloïde. Les lampes sont fixées sur une platine commune 10 qui pourvoit à leur alimentation en électricité.

Un des compartiments sera dénommé premier compartiment 1 par convention. La lampe 5 de ce premier compartiment 1 émet en fonctionnement une lumière blanche ou incolore, c'est-à-dire une lumière qui comporte pratiquement toutes les composantes spectrales du rayonnement électromagnétique visible. Cette lampe peut être une lampe P21W (lampe cristal) utilisée habituellement dans les feux de véhicules automobiles.

La lampe 6 du second compartiment 2 émet quant à elle une lumière colorée ambre. Il peut s'agir d'une lampe PY21W (lampe ambre) communément utilisée pour les indicateurs de direction. Le bulbe de cette lampe 6 est coloré en ambre et constitue les moyens de coloration du flux lumineux.

À titre de variante, on pourrait prévoir d'utiliser une lampe cristal et de placer à l'avant de cette lampe dans le compartiment 2 un écran de coloration du faisceau lumineux émis par la lampe.

On comprendra bien que pourront être considérés comme moyens de coloration du flux lumineux prévus entre la lampe 6 du second compartiment 2 et l'écran 4 tout dispositif qui réalisera en amont de l'écran 4 un flux lumineux coloré, ambre dans l'exemple décrit.

Les faces internes des parois 7, 8 en forme de paraboloïde sont aluminées. Chaque lampe 5, 6 est placée de manière à ce que son filament se trouve approximativement au foyer du paraboloïde qui la reçoit. Ainsi on réalise un réflecteur 7, 8 pour chaque lampe qui redirige vers l'avant les rayons lumineux que celle-ci émet vers l'arrière.

À l'avant des deux compartiments 1, 2, s'étend un écran 4 coloré et translucide. Cet écran 4 4 possède une couleur uniforme, en l'occurrence bleu-vert. Cet écran s'étend non seulement au droit du premier compartiment 1, mais également au droit du second compartiment 2.

Cet écran 4 présente sur l'une de ses faces des éléments optiques d'étalement du faisceau lumineux, en l'occurrence des stries cylindriques horizontales qui étalent le faisceau lumineux selon la verticale.

À l'avant de l'écran 4 est disposée une glace 3 (ou transparent) qui joue le rôle de glace de fermeture de la partie avant du feu.

Cette glace 3 est translucide et colorée, ici en rose. Elle s'étend bien sûr au droit des deux compartiment 1, 2 puisqu'elle constitue la glace extérieure (ou glace de fermeture) du feu.

Des éléments optiques 3a d'étalement du faisceau lumineux sont prévus sur la face interne de la glace 3. Il s'agit de stries cylindriques verticales 3a qui réalisent un étalement horizontal du faisceau lumineux.

Grâce aux éléments optiques de l'écran 4 et de la glace 3, on réalise un étalement respectivement vertical et horizontal du faisceau lumineux conformément aux prescriptions réglementaires.

D'autre modes de réalisation de l'étalement du faisceau lumineux pourront être utilisés sans sortir du cadre de l'invention. Par exemple, les éléments optiques prévus sur la face interne de la glace 3 pourront être des portions de tore qui réalisent à elles seules l'étalement vertical et horizontal du faisceau lumineux. Dans ce dernier cas, il n'est plus nécessaire de prévoir des éléments optiques sur l'écran 4.

Lors de son fonctionnement, la lampe 5 du premier compartiment, avec l'aide du réflecteur 7 qui lui est associé, émet un faisceau lumineux incolore qui traverse l'écran 4 bleu-vert puis la glace 3 rose. Comme nous l'enseigne le brevet français numéro 2 530 781 (déjà mentionné), le faisceau lumineux sort alors incolore du projecteur. On réalise ainsi la fonction recul.

La lampe 6 émet quant à elle un faisceau ambre. Après passages successifs à travers l'écran 4 puis la glace 3, le faisceau lumineux est à nouveau de couleur ambre, puisque la courbe de transmission de la lumière en fonction de la fréquence de l'ensemble glace-écran est approximativement constante (voir la figure 7 du document précité). On réalise ainsi la fonction indicateur de direction.

Lorsque les lampes ne sont pas en service, seule la glace 3 est visible et, même par transparence à travers la glace 3, on ne peut pas distinguer la séparation entre les différentes fonctions puisque l'écran 4 recouvre les deux compartiments 1, 2. Le feu a donc un aspect uniforme tout à fait satisfaisant.

Bien sûr, l'invention ne se limite pas au mode de réalisation décrit ci-dessus. Le feu pourra notamment réaliser en outre d'autres fonctions, comme la fonction "stop", la fonction brouillard ou la fonction feu de position. Dans ce cas, la glace de fermeture sera avantageusement uniforme sur toute sa surface.

## Revendications

1. Feu de signalisation, notamment pour véhicule, comportant :
- au moins un premier et un second compartiments (1, 2) qui reçoivent chacun au moins une lampe (5, 6),
- une glace (3) colorée dans une première couleur qui s'étend au moins au droit des premier et second compartiments (1, 2),
- un écran (4) situé entre la première lampe (5) du premier compartiment (1) et la glace (3) au droit du premier compartiment (1) et coloré dans une deuxième couleur complémentaire à la première couleur par rapport au faisceau lumineux que doit émettre le premier compartiment (1),
dans lequel :
- l'écran (4) s'étend également au droit du second compartiment (2),
- au droit des premier et second compartiments (1, 2), l'écran (4) a une couleur uniforme,
- il est prévu la seconde lampe (6) émettant quant à elle une lumière colorée dans le second compartiment (2) ou des moyens de coloration du flux lumineux entre la seconde lampe (6) du second compartiment (2) et l'écran (4).

2. Feu de signalisation selon la revendication 1, **caractérisé en ce que** l'écran (4) est coloré en bleu-vert et la glace (3) est colorée en rose.

3. Feu de signalisation selon l'une quelconque des revendications 1 et 2, **caractérisé en ce que** la lampe (5) du premier compartiment (1) est une lampe cristal.

4. Feu de signalisation selon l'une quelconque des revendications 1 à 3, **caractérisé en ce que** la lampe (6) du second compartiment (2) est une lampe ambre.

5. Feu de signalisation selon l'une quelconque des revendications 1 à 3, **caractérisé en ce que** la lampe du second compartiment (2) est une lampe cristal et **en ce qu'**il est prévu un écran de coloration du faisceau lumineux entre cette lampe et l'écran (4).

6. Feu de signalisation selon l'une quelconque des revendications 1 à 5, **caractérisé en ce que** l'écran (4) présente sur l'une de ses faces des stries cylindriques horizontales.

7. Feu de signalisation selon l'une quelconque des revendications 1 à 6, **caractérisé en ce que** la glace (3) présente sur sa face interne des stries cylindriques verticales (3a).

8. Feu de signalisation selon l'une quelconque des revendications 1 à 7, **caractérisé en ce que** la glace (3) est la glace extérieure de fermeture du feu.

9. Feu de signalisation selon l'une quelconque des revendications 1 à 8, **caractérisé en ce que** le premier compartiment (1) réalise une fonction recul et le second compartiment (2) une fonction indicateur de direction.

10. Feu de signalisation selon la revendication 9, **caractérisé en ce que** le feu comporte d'autres compartiments qui réalisent d'autres fonctions.

## Patentansprüche

1. Signalleuchte, insbesondere für Kraftfahrzeuge, mit:
- wenigstens einem ersten und einem zweiten Raum (1, 2), die jeweils mindestens eine Lampe (5, 6) aufnehmen,
- einer in einer ersten Farbe gefärbten Scheibe (3), die wenigstens rechtwinklig zum ersten und zweiten Raum (1, 2) verläuft,
- einem Filter (4), der zwischen der ersten Lampe (5) des ersten Raums (1) und der Scheibe (3) rechtwinklig zu dem ersten Raum (1) angeordnet und in einer zweiten Farbe gefärbt ist, die bezüglich des aus dem ersten Raum (1) auszusendenden Lichtbündels komplementär zu der ersten Farbe ist,
bei der
- der Filter (4) auch rechtwinklig zum zweiten Raum (2) verläuft,
- der Filter (4) rechtwinklig zum ersten und zweiten Raum (1, 2) eine einheitliche Farbe hat,
- die ihrerseits im zweiten Raum (2) ein farbiges Licht aussendende zweite Lampe (6) oder Mittel zum Färben des Lichtstroms zwischen der zweiten Lampe (6) des zweiten Raums (2) und dem Filter (4) vorgesehen ist.

2. Signalleuchte nach Anspruch 1,
**dadurch gekennzeichnet, dass** der Filter (4) blaugrün und die Scheibe (3) rosa gefärbt sind.

3. Signalleuchte nach einem der Ansprüche 1 oder 2,
**dadurch gekennzeichnet, dass** die Lampe (5) des ersten Raums (1) eine klare Lampe ist.

4. Signalleuchte nach einem der Ansprüche 1 bis 3,
**dadurch gekennzeichnet, dass** die Lampe (6) des zweiten Raums (2) eine orangefarbene Lampe ist.

5. Signalleuchte nach einem der Ansprüche 1 bis 3,
**dadurch gekennzeichnet, dass** die Lampe des zweiten Raums (2) eine klare Lampe ist, und dass ein Filter zum Färben des Lichtbündels zwischen dieser Lampe und dem Filter (4) vorgesehen ist.

6. Signalleuchte nach einem der Ansprüche 1 bis 5,
**dadurch gekennzeichnet, dass** der Filter (4) auf einer seiner Seiten horizontale zylindrische Rillen aufweist.

7. Signalleuchte nach einem der Ansprüche 1 bis 6,
**dadurch gekennzeichnet, dass** die Scheibe (3) auf ihrer Innenseite vertikale zylindrische Rillen (3a) aufweist.

8. Signalleuchte nach einem der Ansprüche 1 bis 7,
**dadurch gekennzeichnet, dass** die Scheibe (3) die äußere Abdeckscheibe der Leuchte ist.

9. Signalleuchte nach einem der Ansprüche 1 bis 8,
**dadurch gekennzeichnet, dass** der erste Raum (1) ein Rückfahrlicht und der zweite Raum (2) ein Blinklicht verwirklicht.

10. Signalleuchte nach Anspruch 9,
**dadurch gekennzeichnet, dass** die Leuchte weitere Räume umfasst, die andere Lichtfunktionen bewirken.

## Claims

1. Indicator light, in particular for a vehicle, comprising:
- at least first and second compartments (1, 2) which each receive at least one lamp (5, 6),
- a glass (3) coloured in a first colour, which extends at least in line with the first and second compartments (1, 2),
- a screen (4) situated between the first lamp (5) in the first compartment (1) and the glass (3) in line with the first compartment (1) and coloured in a second colour complementary to the first colour with respect to the light beam which the first compartment (1) is to emit,
- the screen (4) also extends in line with the second compartment (2),
- in line with the first and second compartments (1, 2), the screen (4) has a uniform colour,
- there is provided the second lamp (6) for its part emitting a coloured light in the second compartment (2) or means of colouring the light flux between the second lamp (6) in the second compartment (2) and the screen (4).

2. Indicator light according to Claim 1, **characterised in that** the screen (4) is blue-green coloured and the glass (3) is pink coloured.

3. Indicator light according to either one of Claims 1 and 2, **characterised in that** the lamp (5) in the first compartment (1) is a crystal lamp.

4. Indicator light according to any one of Claims 1 to 3, **characterised in that** the lamp (6) in the second compartment (2) is an amber lamp.

5. Indicator light according to any one of Claims 1 to 3, **characterised in that** the lamp in the second compartment (2) is a crystal lamp and **in that** a screen for colouring the light beam between this lamp and the screen (4) is provided.

6. Indicator light according to any one of Claims 1 to 5, **characterised in that** the screen (4) has horizontal cylindrical serrations on one of its faces.

7. Indicator light according to any one of Claims 1 to 6, **characterised in that** the glass (3) has vertical cylindrical serrations (3a) on its internal face.

8. Indicator light according to any one of Claims 1 to 7, **characterised in that** the glass (3) is the external closure glass of the light.

9. Indicator light according to any one of Claims 1 to 8, **characterised in that** the first compartment (1) fulfils a reversing function and the second compartment (2) a direction-indicating function.

10. Indicator light according to Claim 9, **characterised in that** the light comprises other compartments which fulfil other functions.
